# EUROPÄISCHE PATENTSCHRIFT

(11) **EP 3 853 500 B1**
(45) Veröffentlichungstag und Bekanntmachung des Hinweises auf die Patenterteilung: **14.01.2026**
(21) Anmeldenummer: 20739280.4
(22) Anmeldetag: 29.06.2020
(51) Int. Cl.: F16H 25/20

(54) **LINEARANTRIEBSSYSTEM**
LINEAR DRIVE SYSTEM
SYSTÈME D'ENTRAÎNEMENT LINÉAIRE

(30) Priorität: 03.07.2019 DE 102019004690
(43) Veröffentlichungstag der Anmeldung: 28.07.2021
(73) Patentinhaber: Hydac International GmbH, 66280 Sulzbach/Saar (DE)
(72) Erfinder: KRÄMER, Florian Benjamin, 66280 Sulzbach (DE); SCHWARZ, Felix Anton, 66119 Saarbrücken (DE)
(74) Vertreter: Bartels und Partner, Patentanwälte
(86) Internationale Anmeldenummer: PCT/EP2020/068280
(87) Internationale Veröffentlichungsnummer: WO 2021/001320

(56) Entgegenhaltungen:
- EP-A1- 1 310 424
- US-A- 4 563 908

## Beschreibung

Die Erfindung betrifft ein Linearantriebssystem mit den Merkmalen im Oberbegriff des Anspruchs 1.

Aus DE 20 2014 104 735 U1 ist als Linearantriebsystem ein Elektrozylinder bekannt, umfassend einen Linearaktuator und einen mit dem Aktuator verbundenen Elektromotor zum Antreiben des Aktuators, wobei der Aktuator ein Gehäuse umfasst, in dem eine translatorisch bewegbare Kolbenstange montiert ist, wobei das Gehäuse eine dem Elektromotor näher gelegene und mit diesem verbundene hintere Kopfanordnung, ein Zwischenelement oder einen Mantel und eine vom Elektromotor weiter entfernte vordere Kopfanordnung umfasst, an der die Spitze der Kolbenstange aus dem Gehäuse austritt, wobei ein Spindelantrieb, der eine Spindel und eine Spindelmutter umfasst, zwischen dem Elektromotor und der Kolbenstange angeordnet ist. Demgemäß erfolgt bei der bekannten Lösung die Umwandlung der Drehbewegung des Elektromotors in eine Linearbewegung mittels des Spindelantriebes.

WO 2011/130863 A2 zeigt ein Linearantriebssystem mit einem durch einen Elektromotor antreibbaren Hybridwirkzylinder, der eine Hohlspindel und als Stellglied eine hohlgebohrte Kolbenstange aufweist, die linear verfahrbar auf der Hohlspindel angeordnet ist. In den Hybridwirkzylinder ist eine Gasfeder integriert, die sich mit ihrem einen Ende an einem Bodenlager der Hohlspindel und mit ihrem anderen Ende an der Kolbenstange abstützt.

Die Gasfeder dient als unterstützendes Element zur Schuberhöhung des Hybridwirkzylinder ohne die Gesamtmechanik des Elektrozylinders zu ändern und kann gleichzeitig eine Notfunktion erfüllen, bei der die Kolbenstange bei einem Ausfall des Systems, beispielsweise bei Stromausfall, in eine vorgebbare "Homing"-Position verfahren und dort mit Kraft gehalten wird.

Bei der bekannten Lösung kann es, bezogen auf die Gasfeder, zu Gasverlusten kommen, was deren Federcharakteristik ändert und das Nachfüllen des Betriebsmediums in Form des Arbeitsgases im Rahmen von Wartungsarbeiten führt zum Stilllegen der zugehörigen Anlage und generiert einen entsprechenden Aufwand. Da das bei der Gasfeder eingesetzte Arbeitsgas ein kompressibles Medium ist, regiert das System auf Änderungen der Umgebungstemperatur, was gleichfalls zu einer Änderung der Federcharakteristik führt, was insgesamt die Betriebssicherheit beeinträchtigen kann.

Die EP 1 310 424 A1 offenbart ein Linearantriebssystem mit einem mittels eines elektrischen Antriebes translatorisch verfahrbaren Stellglied, das mit einem mechanischen Energiespeicher in Form einer Feder derart gekoppelt ist, dass bei einem Energieverlust am elektrischen Antrieb respektive im Notbetrieb das Stellglied eine vorgebbare Position einnimmt und dabei eine Stellkraft ausübt, wobei mittels des elektrischen Antriebes ein Spindelantrieb ansteuerbar ist, mittels dem das Stellglied translatorisch bewegbar ist, der eine in einem Spindelgehäuse drehbar geführte Gewindespindel aufweist, die über eine mit ihr in Eingriff befindliche Stellmutter, die unverdrehbar, aber translatorisch im Spindelgehäuse bewegbar geführt, mit dem Stellglied für dessen Bewegung zusammenwirkt, das ein Zylinderrohr aufweist, das in jeder seiner Verfahrstellungen teilweise im Spindelgehäuse über die Stellmutter geführt ist und mit seinem freien Ende aus dem Spindelgehäuse hervorragt, und wobei die Feder in jeder Verfahrstellung des Stellgliedes gespannt ist.

Die US 4 563 908 offenbart einen elektromechanischen Aktuator.

Ausgehend von diesem Stand der Technik liegt daher der Erfindung die Aufgabe zugrunde, die bekannten Linearantriebssysteme weiter zu verbessern.

Eine dahingehende Aufgabe löst ein Linearantriebssystem mit den Merkmalen des Patentanspruches 1 in seiner Gesamtheit.

Dadurch, dass gemäß den Merkmalen des kennzeichnenden Teils des Patentanspruches 1, die Feder sich mit ihrem einen freien Ende am freien Ende des Spindelgehäuses und mit ihrem anderen freien Ende an einem Abschlussteil des Stellgliedes oder an diesem selbst abstützt, ist ein Linearantriebssystem geschaffen, das auch im lang andauernden Betrieb und frei von etwaigen Änderungen der Umgebungsbedingungen, wie Temperatur, störungsfrei seine Funktion wahrnimmt. Durch den Einsatz eines mechanischen Energiespeichers, anstelle eines Gasspeichers, ist eine rein mechanische Lösung geschaffen, die dem Grunde nach für Ihre Funktion keinen zusätzlichen Wartungsaufwand erfordert, wie beispielsweise ein Nachfüllen des Arbeitsgases bei der bekannten Gasfeder. Dadurch, dass die Feder zur Ansteuerung des Stellgliedes außerhalb der translatorisch zueinander verfahrbaren Komponenten des Linearantriebssystems liegt, ist eine besonders schlank aufbauende Antriebskonzeption erreicht, bei der in einem koaxialen Ringspalt zwischen dem Spindelgehäuse und dem Stelltrieb sich ausschließlich die Stellmutter befindet. Vorzugsweise ist dabei das Abschlussteil am freien Ende des Stellgliedes überstehend angeordnet.

Grundsätzlich ist das erfindungsgemäße Linearantriebssystem für das Ansteuern respektive Betätigen eines sogenannten Kraftnehmers vorgesehen, beispielsweise in Form eines Ventiles oder einer Armatur, das bzw. die jeweils auf Position oder Kraft geregelt werden muss. Im sogenannten Notfall, bei dem von einem Verlust der Netzversorgung für den elektrischen Antrieb auszugehen ist, muss der Kraftnehmer auf eine bestimmte sichere Position und/oder mit einer bestimmten Haltekraft gefahren werden, damit beispielsweise ein unter Druck stehender Fluidfluss zu einem Verbraucher unterbrochen wird. Dieser Sicherheitszustand muss innerhalb einer vordefinierten Zeit erreicht werden, die kurz bemessen ist und vorzugsweise im Bereich von wenigen zehntel Sekunden liegt.

Bei dem erfindungsgemäßen Linearantriebssystems ist der mechanische Energiespeicher die Feder, die sich mit ihrem einen freien Ende an dem Spindelgehäuse und mit ihrem anderen freien Ende an dem Abschlussteil des Stellgliedes oder an diesem selbst abstützt und in jeder Verfahrstellung des Stellgliedes gespannt ist. Vorzugsweise ist diese Feder als Spiral- oder Tellerfeder konzipiert, die permanent gespannt ist und im Normalbetrieb arbeitet der Elektrozylinder, ohne seine Gesamtmechanik zu verändern, mit oder gegen diese Feder. Dabei sind prinzipiell zwei Fälle zu unterscheiden:
a) Im Notfall soll das Stellglied maximal ausgefahren werden. Dann wirkt der mechanische Energiespeicher in Form der Feder immer "drückend" auf den Kraftnehmer ein und entsprechend muss der Elektrozylinder über seinen Spindelantrieb immer eine ziehende Kraft aufbringen.
b) Im Notfall soll das Stellglied maximal eingefahren werden. Dann wirkt der mechanische Energiespeicher in Form der Feder immer "ziehend" auf den Kraftnehmer ein und entsprechend muss der Elektrozylinder über den Spindelantrieb immer eine drückende Kraft aufbringen.

Mit dem mechanischen Energiespeicher in Form der Feder ist es also möglich, auch einen Notfall, insbesondere in Form eines Stromausfalles mit abzudecken. Im dahingehenden Fall zieht bzw. drückt die Feder dann das Stellglied in die entsprechende Position, was zu einer Drehung der Spindel des Spindelantriebes führt und damit gleichzeitig zur Drehung des Rotors des gekoppelten elektrischen Antriebs. Bei entsprechender Gestaltung der Antriebs- oder Motorsteuerung kommt es dann zu keinem Stromfluss in den Spulen des Stators des Motors und damit zu keinem ungewollten Bremseffekt bei der Linearbewegung aufgrund des sich dann in einem generatorischen Betrieb befindlichen Motors. Die gewünschte Notfallposition mit einem entsprechenden Krafthub kann insoweit ungehindert angefahren werden. Anstatt der vorzugsweise hier vorgesehenen permanenten Kopplung besteht auch die Möglichkeit, den elektrischen Antrieb vom Spindelantrieb, beispielsweise über eine entsprechende Kupplung im Notfall definiert zu entkoppeln. Sobald der angesprochene Notfall, beispielsweise durch Stromausfall, beseitigt ist, kann direkt oder nach einer entsprechenden Referenzierungsfahrt mit dem Stellglied über den Stellantrieb wieder in die Regelung für den Normalbetrieb übergegangen werden.

Weitere vorteilhafte Ausführungsformen des erfindungsgemäßen Linearantriebssystems sind Gegenstand der sonstigen Unteransprüche.

Im Folgenden wird die erfindungsgemäße Lösung anhand eines Ausführungsbeispieles nach der Zeichnung näher erläutert. Dabei zeigen in prinzipieller und nicht maßstäblicher Darstellung die
- Fig. 1: eine perspektivische Ansicht auf das erfindungsgemäße Linearantriebssystem; und
- Fig. 2: teilweise in Ansicht, teilweise im Längsschnitt das Linearan- triebssystem nach der Fig. 1.

Zur Realisierung von Linearbewegungen bieten sich aufgrund der einfachen Integrierbarkeit und Wartungsfreiheit häufig Elektrozylinder an, bei denen eine Umwandlung einer Drehbewegung der Antriebswelle eines elektrischen Antriebes mittels eines Gewindetriebes in eine Linearbewegung eines Stellgliedes erfolgt. Derartige Elektrozylinder sind aus dem Stand der Technik bekannt, beispielsweise aus der DE 20 2014 104 735 U1.

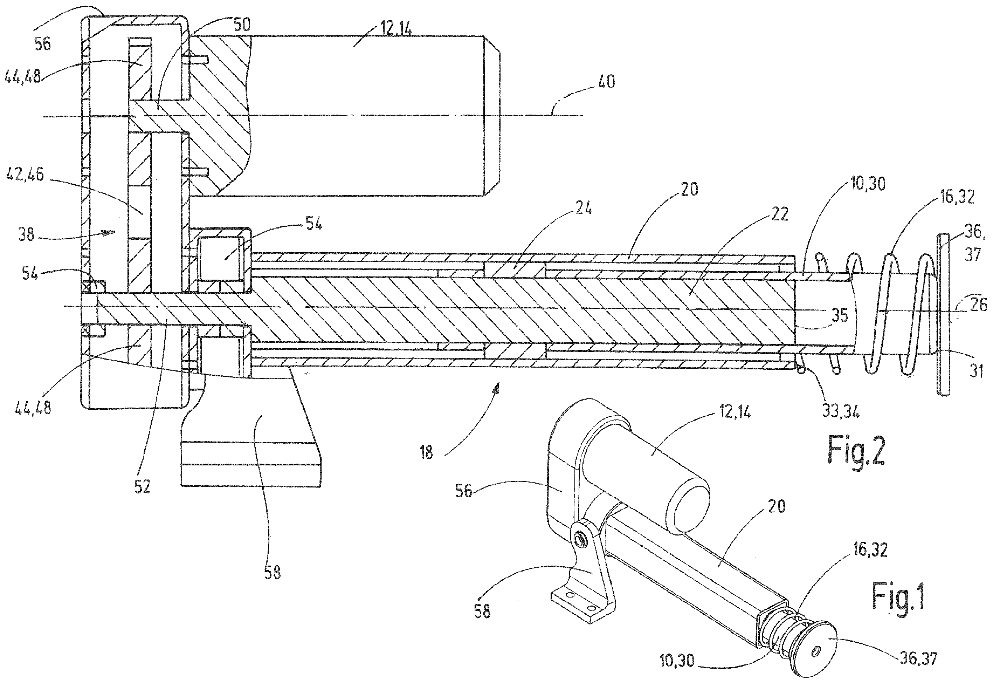

Fig. 1 zeigt ein erfindungsgemäßes Linearantriebssystem mit einem Stellglied 10, das mittels eines elektrischen Antriebes 12 in Form eines Elektromotors 14 translatorisch verfahrbar ist. Das Stellglied 10 ist mit einem mechanischen Energiespeicher 16 derart gekoppelt, dass bei einem Energieverlust am elektrischen Antrieb 12, d. h. in einem Notbetrieb, das Stellglied 10 eine vorgebbare Position einnimmt und dabei eine Stellkraft ausübt. Dafür ist mittels des elektrischen Antriebes 12 ein Spindelantrieb 18 ansteuerbar, mittels dem das Stellglied 10 translatorisch bewegbar ist.

Der Spindelantrieb 18 weist eine in einem Spindelgehäuse 20 drehbar geführte Gewindespindel 22 auf, die über eine mit ihr in Eingriff befindliche Stellmutter 24 mit dem Stellglied 10 für dessen Bewegung in Richtung einer Längsachse 26 der Gewindespindel 22 zusammenwirkt. Die Stellmutter 24 ist um die Längsachse 26 unverdrehbar, aber translatorisch entlang der Längsachse 26 bewegbar, im Spindelgehäuse 20 geführt. Dazu ist das Spindelgehäuse 20 hohl ausgebildet und weist einen nicht-rotationssymmetrischen, insbesondere einen rechteckigen, vorzugsweise quadratischen, Innenquerschnitt, insbesondere mit abgerundeten Kanten, auf. Der Außenquerschnitt der Stellmutter 24 entspricht im Wesentlichen dem Innenquerschnitt des Spindelgehäuses 20, so dass diese drehfest im Spindelgehäuse 20 geführt ist. Die Gewindespindel 22 ist als Zylinderstange ausgebildet, die am Außenumfang ein Gewinde trägt, das mit einem Gewinde am Innenumfang der Stellmutter 24 in Eingriff ist. Das Stellglied 10 weist ein Zylinderrohr 30 auf, das über die Stellmutter 24 drehfest geführt ist. Das Zylinderrohr 30 ist in jeder seiner Verfahrstellungen teilweise im Spindelgehäuse 20 angeordnet und ragt teilweise mit seinem freien Ende 31 aus dem Spindelgehäuse 20 hervor, dessen freies Ende 33 mit dem freien Ende 35 der Gewindespindel 22 bündig abschließt.

Der mechanische Energiespeicher 16 ist als Spiral-Druckfeder 32 ausgebildet, die sich mit ihrem einen freien Ende an der freien Stirnseite 34 des Spindelgehäuses 20 und mit ihrem anderen freien Ende an einem Abschlussteil 36 abstützt, das quer zur Längsachse 26 des Stellgliedes 10 angeordnet, das freie Ende 31 des Stellgliedes 10 abschließt und als kreisrunde Scheibe 37 ausgebildet ist, deren Radius größer ist als der Radius des Zylinderrohrs 30 des Stellgliedes 10. Die Druckfeder 32 ist zumindest im Normalbetrieb in jeder Verfahrstellung des Stellgliedes 10 gespannt. Anstelle der in den Fig. gezeigten Spiralfeder 32 kann auch eine Tellerfeder oder ein Tellerfederpaket (beides nicht dargestellt) eingesetzt werden.

Im Normalbetrieb, in dem der elektrische Antrieb 12 mit ausreichend elektrischem Strom versorgt ist, arbeitet der Spindelantrieb 18 bei einem Einfahren in das Spindelgehäuse 20 gegen die Druckfeder 32 und bringt unter der Wirkung des elektrischen Antriebes 12 eine gegenüber dem stationären Spindelgehäuse 20 ziehende Kraft auf das Stellglied 10 auf, oder wird bei einem Ausfahren aus dem Spindelgehäuse 20 von der Druckfeder 32 unterstützt, bringt also unter der Wirkung des elektrischen Antriebes 12 eine gegenüber dem stationären Spindelgehäuse 20 betragsmäßig kleiner ziehender Kraft auf das Stellglied 10 auf. Im Normalbetrieb ist in jeder Verfahrstellung des Stellgliedes 10 die Druckfeder 32 permanent gespannt.

Im Notbetrieb hingegen, in dem der elektrische Antrieb 12 einen Stromausfall erfährt, fällt die Wirkung des elektrischen Antriebs 12 auf das Stellglied 10 weg, so dass unter der Einwirkung der Federkraft der sich entspannenden Druckfeder 32 mittels der druckbeaufschlagten Scheibe 37 das Stellglied 10 aus dem Spindelgehäuse 20 ausfährt. Der elektrische Linearantrieb kann in einem "erweiterten" Normalbetrieb über den Spindelantrieb 18 maximal ein- oder ausgefahren werden, bis die Druckfeder 32 auf Block bzw. die Stellmutter 24 am freien Ende 33 des Spindelgehäuses 20 auf Anschlag geht. Bei der erfindungsgemäßen Lösung sind die maximalen freien Ein- und Ausfahrbewegungen des Stellgliedes 10 des Spindelantriebes 18 aber derart gewählt, dass die Druckfeder 32 ihre Eigenspannung in einem Maße beibehält, dass eine Notbetätigung eines an das System angeschlossenen oder betätigbaren Kraftnehmers (nicht dargestellt), wie beispielsweise ein Ventil, sichergestellt ist.

In einem in den Figuren nicht gezeigten Ausführungsbeispiel kann die Feder 32 auch als Zugfeder ausgebildet sein, die mit ihrem einen freien Ende mit dem Spindelgehäuse 20 und mit ihrem anderen freien Ende mit dem Abschlussteil 36 des Stellgliedes 10 fest verbunden ist. Im Normalbetrieb wird der Spindelantrieb 18 dann entgegengesetzt, wie vorstehend für die Druckfeder 32 beschrieben, bei einem Einfahren in das Spindelgehäuse 20 von der Zugfeder unterstützt und arbeitet bei einem Ausfahren aus dem Spindelgehäuse 20 gegen deren Zugkraft an. In jeder Verfahrstellung des Stellgliedes 10 im Normalbetrieb ist auch hier die Zugfeder permanent unter Eigenspannung gehalten. Im Notbetrieb fällt die Wirkung des elektrischen Antriebs 12 auf das Stellglied 10 dann wiederum weg, so dass unter der Kraft der Zugfeder das Stellglied 10 in das Spindelgehäuse 20 einfährt. Es versteht sich, dass im dahingehenden Fall der Kraftnehmer "fail-safe" konstruktiv anders aufgebaut sein muss, als im Fall mit der Druckfeder 32, bei der im Notfall das Ventil in seine fluidsperrende Stellung gedrückt ist.

Während die Druckfeder 32 das Stellglied 10 drückend bzw. die Zugfeder das Stellglied 10 ziehend in seine vorgegebene Betätigungsposition für den Kraftnehmer verfährt, wird der Rotor des im Notfall stromlosen elektrischen Antriebs 12 über eine Drehung der Gewindespindel 22 im Sinne eines Generators passiv angetrieben, was die Bewegung des Stellgliedes 10 jedoch nicht hemmt.

Der elektrische Antrieb 12 ist über einen Riementrieb 38 mit der Gewindespindel 22 in Wirkverbindung, wobei die weitere Längsachse 40 des elektrischen Antriebes 12 parallel zur Längsachse 26 des Spindelantriebes 18 angeordnet ist. Anstelle eines Riementriebes 38 mit einem Antriebsriemen 42, der über zwei Reibscheiben 44 (antriebs- und abtriebsseitig) oder als Zahnriemen 46 über zwei Zahnräder 48 geführt ist, lässt sich auch unter Weglassen des Riemens 42 ein Zahnradgetriebe mit ineinandergreifenden Zahnrädern (nicht dargestellt) einsetzen.

Die Rotor- oder Abtriebswelle 50 des Elektromotors 14 erstreckt sich parallel zur Gewindespindel 22 mit ihrer Antriebswelle 52, die endseitig in Lagerstellen 54 üblicher Bauart geführt ist. Jedoch können der Motor 14 und die Gewindespindel 22 auch in U- oder L-Form zueinander angeordnet sein. Alle Getriebekomponenten für die Antriebswelle 52 einschließlich derselben sind in einer Konsole 56 nach außen hin abgeschlossen geführt, die über ein Fußteil 58 schwenkbar aufgenommen auf dem Boden oder einem Maschinenteil aufständerbar ist.

Vorzugsweise ist vorgesehen, dass im Notbetrieb das Stellglied 10 auf einen in den Figuren nicht gezeigten Kraftnehmer wirkt, wie ein Ventil oder eine Armatur, der mittels des Stellgliedes 10 innerhalb einer vorgebbaren Zeit in eine vorgebbare Position gebracht und gegebenenfalls in dieser durch Anschlag gehalten wird. Dazu ist das Stellglied 10 mit dem Kraftnehmer gegebenenfalls fest verbindbar.

Vorzugsweise ist ein in den Figuren nicht dargestellter Frequenzumrichter vorgesehen, der mit dem elektrischen Antrieb 12 in Wirkverbindung ist und der das Drehmoment und/oder die Drehzahl des elektrischen Antriebes 12 steuert oder regelt. Der Antrieb 12 ist als synchroner oder asynchroner Elektromotor 14 ausgebildet, der insoweit über einen Umrichter ansteuerbar ist. Zudem ist ein in den Figuren nicht gezeigter Regler vorgesehen, der den Frequenzumrichter ansteuert.

Bei einer Positionsregelung kann der Regler zum Ermitteln der Position eines Verstellteiles des Kraftnehmers eingangsseitig mit einem Geber- oder Wegmesssystem elektrisch verbunden sein, das die Verfahrstrecke des Verstellteiles und/oder des Stellgliedes 10 erfasst. Auch ist denkbar, dass der Regler mit einem Sensor zum Erfassen der Position und/oder einem Sensor zum Erfassen der Drehzahl und/oder dem Drehwinkel des Elektromotors 14 verbunden ist. Alternativ können die Position und/oder die Drehzahl des Motors auch unter Zuhilfenahme eines hinterlegten Motormodels geschätzt werden. In Abhängigkeit der Position und/oder der Drehzahl des Motors 14 sowie der Gewindesteigung der Gewindespindel 22 kann der Regler die Verfahrstellung des Verstellteiles und das Stellglied 10 des Linearantriebes entsprechend über die zugehörige Regelung und mithin auch ohne Wegmesssystem ansteuern.

Bei einer Kraftregelung kann der Regler zum Ermitteln der durch das Stellglied 10 ausgeübten Kraft eingangsseitig mit einer Kraftmessdose oder einem Drehmomentmessbolzen verbunden sein. Alternativ kann das Drehmoment des Motors 14 unter Zuhilfenahme des Motormodels geschätzt werden. In Abhängigkeit des Drehmoments und der Gewindesteigung der Gewindespindel 22 kann die Kraft ermittelt werden und die durch das Stellglied 10 ausgeübte Kraft wird zur Regelung des Linearantriebes herangezogen.

Der Frequenzumrichter weist vorzugsweise sogenannte Insulated Gate Bipolar Transistors (IGBTs) auf, die selbstsperrend ausgebildet sind, also in einem nicht angesteuerten Zustand, beispielsweise bei einem Stromausfall, im Sinne einer "fail-safe"-Lösung geöffnet sind, was mit dazu beiträgt, dass es zu keinem unerwünschten Bremseffekt der Linearbewegung aufgrund eines sich im Generatorbetrieb befindlichen Elektromotors 14 kommt, so dass die im Notbetrieb vorgebbare Verfahrposition des Stellgliedes 10 ungehindert angefahren werden kann.

## Patentansprüche

1. Linearantriebssystem mit einem mittels eines elektrischen Antriebes (12) translatorisch verfahrbaren Stellglied (10), das mit einem mechanischen Energiespeicher (16) in Form einer Feder (32) derart gekoppelt ist, dass bei einem Energieverlust am elektrischen Antrieb (12) respektive im Notbetrieb das Stellglied (10) eine vorgebbare Position einnimmt und dabei eine Stellkraft ausübt, wobei mittels des elektrischen Antriebes (12) ein Spindelantrieb (18) ansteuerbar ist, mittels dem das Stellglied (10) translatorisch bewegbar ist, der eine in einem Spindelgehäuse (20) drehbar geführte Gewindespindel (22) aufweist, die über eine mit ihr in Eingriff befindliche Stellmutter (24), die unverdrehbar, aber translatorisch im Spindelgehäuse (20) bewegbar geführt, mit dem Stellglied (10) für dessen Bewegung zusammenwirkt, das ein Zylinderrohr (30) aufweist, das in jeder seiner Verfahrstellungen teilweise im Spindelgehäuse (20) über die Stellmutter (24) geführt ist und mit seinem freien Ende (31) aus dem Spindelgehäuse (20) hervorragt, und wobei die Feder (32) in jeder Verfahrstellung des Stellgliedes (10) gespannt ist, **dadurch gekennzeichnet, dass** die Feder (32) sich mit ihrem einen freien Ende am freien Ende des Spindelgehäuses (20) und mit ihrem anderen freien Ende an einem Abschlussteil (36) des Stellgliedes (10) oder an diesem selbst abstützt.

2. Linearantriebssystem nach Anspruch 1, **dadurch gekennzeichnet,**
**dass** das Abschlussteil (36) am freien Ende (31) des Stellgliedes (10) überstehend angeordnet ist.

3. Linearantriebssystem nach Anspruch 1 oder 2, **dadurch gekennzeichnet, dass** im Notbetrieb das Stellglied (10) vorzugsweise maximal aus- oder einfährt und die Feder (32) dabei drückend bzw. ziehend auf das Stellglied (10) permanent einwirkt und dass im Normalbetrieb der Spindelantrieb (18) eine gegenüber dem stationären Spindelgehäuse (20) ziehende oder drückende Kraft mittels des elektrischen Antriebes (12) auf das Stellglied (10) aufbringt.

4. Linearantriebssystem nach einem der vorstehenden Ansprüche, **dadurch gekennzeichnet, dass** im Notbetrieb die Feder (32) das Stellglied (10) ziehend oder drückend in die vorgegebene Position bringt, was zu einer passiven Drehung der Gewindespindel (22) und des damit gekoppelten Rotors des elektrischen Antriebes (12) führt.

5. Linearantriebssystem nach einem der vorstehenden Ansprüche, **dadurch gekennzeichnet, dass** der elektrische Antrieb (12) über ein Getriebe respektive einen Riementrieb (38) mit der Gewindespindel (22) in Wirkverbindung ist.

6. Linearantriebssystem nach einem der vorstehenden Ansprüche, **dadurch gekennzeichnet, dass** die Längsachse (40) des elektrischen Antriebes (12) parallel zur Längsachse (26) des Spindelantriebes (18) ist.

7. Linearantriebssystem nach einem der vorstehenden Ansprüche, **dadurch gekennzeichnet, dass** der elektrische Antrieb (12) und der Spindelantrieb (18) über eine Verbindungskonsole (56) miteinander verbunden sind und dass das Stellglied (10) auf einen Kraftnehmer, wie ein Ventil oder eine Armatur, zumindest im Notbetrieb einwirkt.

## Claims

1. Linear drive system having an actuating element (10) that can be displaced in translation by means of an electric drive (12), which is coupled to a mechanical energy accumulator (16) in the form of a spring (32) such that, in the event of an energy loss on the electric drive (12) or in emergency operation respectively, the actuating element (10) assumes a predefinable position and in so doing exerts an actuating force, a spindle drive (18) being able to be actuated by means of the electric drive (12), by means of which spindle drive the actuating element (10) can be moved in translation, said spindle drive having a threaded spindle (22) rotatably mounted in a spindle housing (20), said spindle interacting with the actuating element (10) to move said actuating element via an adjusting nut (24) in engagement therewith, which is mounted such that it can move in translation in the spindle housing (20) but cannot rotate, said actuating element having a cylindrical tube (30), which is guided partially in the spindle housing (20) via the adjusting nut (24) in each of its displacement positions and protrudes with its free end (31) out of the spindle housing (20), and wherein the spring (32) is tensioned in every displacement position of the actuating element (10), **characterised in that** the spring (32) is supported with one of its free ends on the free end of the spindle housing (20) and with its other free end on an end part (36) of the actuating element (10) or on this itself.

2. Linear drive system according to claim 1, **characterised in that** the end part (36) is arranged in a projecting manner on the free end (31) of the actuating element (10).

3. Linear drive system according to either claim 1 or claim 2, **characterised in that**, during emergency operation, the actuating element (10) preferably extends or retracts to a maximum extent and in this process the spring (32) acts permanently on the actuating element (10) by either pushing or pulling it respectively, and **in that**, during normal operation, the spindle drive (18) applies a pulling or pushing force in relation to the stationary spindle housing (20) on the actuating element (10) by means of the electric drive (12).

4. Linear drive system according to any of the preceding claims, **characterised in that**, during emergency operation, the spring (32) moves the actuating element (10) by pushing or pulling into the predefined position, which leads to a passive rotation of the threaded spindle (22) and the rotor, which is coupled thereto, of the electric drive (12).

5. Linear drive system according to any of the preceding claims, **characterised in that** the electric drive (12) is in operative connection via a gear or a belt drive (38) respectively with the threaded spindle (22).

6. Linear drive system according to any of the preceding claims, **characterised in that** the longitudinal axis (40) of the electric drive (12) is parallel to the longitudinal axis (26) of the spindle drive (18).

7. Linear drive system according to any of the preceding claims, **characterised in that** the electric drive (12) and the spindle drive (18) are connected to one another via a connection console (56) and **in that** the actuating element (10) acts on a force sensor, such as a valve or fitting, at least during emergency operation.

## Revendications

1. Système d'entraînement linéaire comprenant un organe (10) de réglage, qui peut être déplacé en translation au moyen d'un entraînement (12) électrique, et qui est accouplé à un accumulateur (16) d'énergie mécanique sous la forme d'un ressort (32) de manière à ce que, lors d'une perte d'énergie à l'entraînement (12) électrique respectivement en fonctionnement d'urgence, l'organe (10) de réglage prenne une position pouvant être donnée à l'avance et applique ainsi une force de réglage, dans lequel, au moyen de l'entraînement (12) électrique, peut être commandé un entraînement (18) à broche, au moyen duquel, l'organe (10) de réglage peut être déplacé en translation, lequel entraînement a, guidée en pouvant tourner dans un fourreau (20) de broche, une broche (22) filetée qui, par un écrou (24) de réglage se trouvant en prise avec elle et guidé sans pouvoir tourner mais avec possibilité de se déplacer en translation dans le fourreau (20) de la broche, coopère avec l'organe (10) de réglage pour son mouvement, lequel a un tube (30) cylindrique qui, dans chacune de ses positions de déplacement, est guidé au moins en partie dans le fourreau (20) de la broche par l'écrou (24) de réglage et fait saillie, par son extrémité (31) libre, du fourreau (20) de la broche, et dans lequel le ressort (32) est tendu dans chaque position de déplacement de l'organe (10) de réglage, **caractérisé en ce que** le ressort (32) s'appuie, par l'une de ses extrémités libres, sur l'extrémité libre du fourreau (20) de la broche et, par son autre extrémité libre, sur une partie (36) de fermeture de l'organe (10) de réglage ou sur celui-ci même.

2. Système d'entraînement linéaire suivant la revendication 1, **caractérisé en ce que** la partie (36) de fermeture est disposée en étant au-dessus à l'extrémité (31) libre de l'organe (10) de réglage.

3. Système d'entraînement linéaire suivant la revendication 1 ou 2, **caractérisé en ce que**, dans le fonctionnement d'urgence, l'organe (10) de réglage sort ou entre, de préférence au maximum et le ressort (32) agit ainsi en permanence en compression ou en traction sur l'organe (10) de réglage et **en ce que**, en fonctionnement normal, l'entraînement (18) à broche applique à l'organe (10) de réglage, au moyen de l'entraînement (12) électrique, une force tirant ou poussant par rapport au fourreau (20) fixe de la broche.

4. Système d'entraînement linéaire suivant l'une des revendications précédentes, **caractérisé en ce que**, en fonctionnement d'urgence, le ressort (32) met l'organe (10) de réglage en tirant ou en poussant dans la position donnée à l'avance, ce qui conduit à une rotation passive de la broche (22) filetée et du rotor ainsi accouplé de l'entraînement (12) électrique.

5. Système d'entraînement linéaire suivant l'une des revendications précédentes, **caractérisé en ce que** l'entraînement (12) électrique est en liaison d'action par une transmission, respectivement un entraînement (38) à courroie, avec la broche (22) filetée.

6. Système d'entraînement linéaire suivant l'une des revendications précédentes, **caractérisé en ce que** l'axe (40) longitudinal de l'entraînement (12) électrique est parallèle à l'axe (26) longitudinal de l'entraînement (18) à broche.

7. Système d'entraînement linéaire suivant l'une des revendications précédentes, **caractérisé en ce que** l'entraînement (12) électrique et l'entraînement (18) à broche sont assemblés ensemble par une console (56) de liaison et **en ce que** l'organe (10) de réglage agit, au moins en fonctionnement d'urgence, sur un preneur de force, comme une soupape ou une armature.
